(19) Europäisches Patentamt
European Patent Office
Office européen des brevets

(11) EP 4 265 704 A1

(12) **EUROPEAN PATENT APPLICATION**
published in accordance with Art. 153(4) EPC

(43) Date of publication:
**25.10.2023 Bulletin 2023/43**

(21) Application number: **21906646.1**

(22) Date of filing: **15.12.2021**

(51) International Patent Classification (IPC):
***C09K 21/04*** *(2006.01)* ***C09K 21/12*** *(2006.01)*
***C08L 101/00*** *(2006.01)*

(52) Cooperative Patent Classification (CPC):
**C08L 101/00; C09K 21/04; C09K 21/12**

(86) International application number:
**PCT/JP2021/046207**

(87) International publication number:
**WO 2022/131284 (23.06.2022 Gazette 2022/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.12.2020 JP 2020208779**

(71) Applicant: **ADEKA CORPORATION**
**Arakawa-ku**
**Tokyo**
**116-8554 (JP)**

(72) Inventors:
- **ASAI Kei**
  **Saitama-shi, Saitama 336-0022 (JP)**
- **NAKAMURA Michio**
  **Saitama-shi, Saitama 336-0022 (JP)**
- **KOKURA Genta**
  **Saitama-shi, Saitama 336-0022 (JP)**

(74) Representative: **Gill Jennings & Every LLP**
**The Broadgate Tower**
**20 Primrose Street**
**London EC2A 2ES (GB)**

(54) **FLAME RETARDANT AGENT COMPOSITION, FLAME-RETARDANT RESIN COMPOSITION, AND MOLDED BODY**

(57) Provided are: a flame retardant agent composition which has excellent flame retardancy as well as an excellent balance of dust suppression and powder flowability; a flame-retardant resin composition containing the same; and a molded article thereof. The flame retardant agent composition contains at least one phosphate compound represented by Formula (1) or (2). When the loose bulk density of the flame retardant agent composition is defined as d (g/cm$^3$), and the 10% cumulative particle size and the 50% cumulative particle size of the flame retardant agent composition in a volume-based particle size distribution are defined as $D_{10}$ ($\mu$m) and $D_{50}$ ($\mu$m), respectively, d, $D_{10}$ ($\mu$m), and $D_{50}$ ($\mu$m) satisfy $0.030 \leq d/(D_{50} - D_{10}) \leq 0.110$.

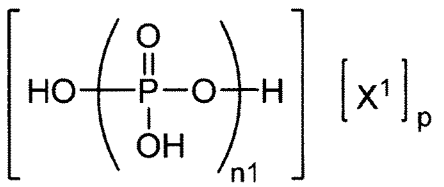

(1)

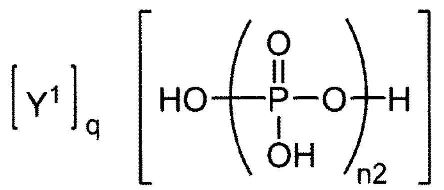

(2)

EP 4 265 704 A1

FIG. 1

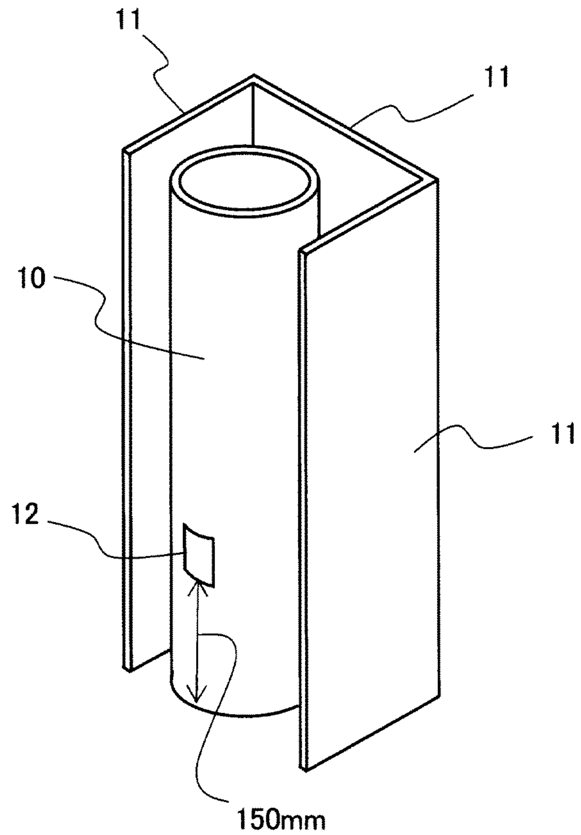

## Description

TECHNICAL FIELD

The present invention relates to: a flame retardant agent composition which has excellent flame retardancy as well as an excellent balance of dust suppression and powder flowability; a flame-retardant resin composition containing the same; and a molded article thereof.

BACKGROUND ART

Synthetic resins have excellent mechanical properties and are highly convenient; therefore, they are used in a wide range of fields, becoming an indispensable material in modern life. However, many of synthetic resins are flammable and, depending on the intended use thereof, it is crucial to impart flame retardancy for improvement in safety. Various methods for imparting flame retardancy to a synthetic resin have been proposed and, for example, methods of adding an intumescent flame retardant agent to a synthetic resin, such as the method disclosed in Patent Document 1, are known.

With regard to the intumescent flame retardant agent, methods of improving powder properties and various properties have been proposed. For example, Patent Document 2 proposes a flame retardant agent composition that not only exhibits excellent flame retardancy but also is capable of inhibiting dust generation and has good storage stability. In addition, Patent Document 3 proposes a flame retardant agent composition that not only exhibits excellent flame retardancy but also is capable of inhibiting dust generation as well as smoke generation during combustion.

RELATED ART DOCUMENTS

PATENT DOCUMENTS

[Patent Document 1] JP 2003-026935A
[Patent Document 2] WO 2016/125612
[Patent Document 3] WO 2019/009340

SUMMARY OF THE INVENTION

PROBLEMS TO BE SOLVED BY THE INVENTION

However, excessive inhibition of dust generation causes a new problem, which is a reduction in powder flowability. A reduction in the powder flowability of a flame retardant agent composition leads to growing concerns about, for example, a reduction in productivity due to clogging and the like in a powder feeding device of a processing machine, and performance deterioration due to defective dispersion at the time of mixing the composition into a resin composition. With respect to this point, Patent Documents 1 to 3 offer neither description nor suggestion, and conventional flame retardant agent compositions have room for improvement in terms of satisfying both suppression of dust scattering and good powder flowability.

In view of the above, an object of the present invention is to provide: a flame retardant agent composition which has excellent flame retardancy as well as an excellent balance of dust suppression and powder flowability; a flame-retardant resin composition containing the same; and a molded article thereof.

MEANS FOR SOLVING THE PROBLEMS

The present inventors intensively studied to solve the above-described problems and consequently discovered that, in a flame retardant agent composition in which a prescribed phosphate compound is used, suppression of dust scattering and good powder flowability can both be achieved in addition to excellent flame retardancy by controlling the ratio of the loose bulk density and the particle size distribution width to be in a specific range, thereby completing the present invention.

That is, the present invention provides: a flame retardant agent composition containing at least one phosphate compound represented by Formula (1) or (2),
wherein, when the loose bulk density of the flame retardant agent composition is defined as d ($g/cm^3$), and the 10% cumulative particle size and the 50% cumulative particle size of the flame retardant agent composition in a volume-based particle size distribution are defined as $D_{10}$ ($\mu$m) and $D_{50}$ ($\mu$m), respectively, d, $D_{10}$ ($\mu$m), and $D_{50}$ ($\mu$m) satisfy equation (I):

$$0.030 \leq d/(D_{50} - D_{10}) \leq 0.110 \qquad (I).$$

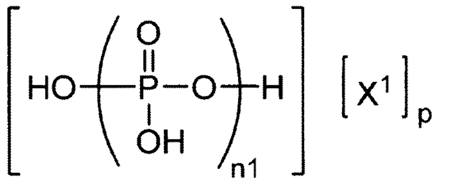

(1)

In Formula (1), n1 represents a number of 1 to 100; $X^1$ represents ammonia or a triazine derivative represented by Formula (1-A); and p represents a number satisfying $0 < p \leq n1 + 2$.

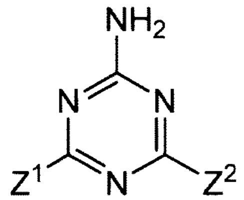

(1 − A)

In Formula (1-A), $Z^1$ and $Z^2$ each independently represent a group selected from the group consisting of a $-NR^{11}R^{12}$ group, a hydroxy group, a mercapto group, a linear or branched alkyl group having 1 to 10 carbon atoms, a linear or branched alkoxy group having 1 to 10 carbon atoms, a phenyl group, and a vinyl group; and $R^{11}$ and $R^{12}$ each independently represent a hydrogen atom, a linear or branched alkyl group having 1 to 6 carbon atoms, or a methylol group.

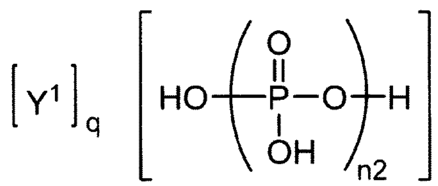

(2)

In Formula (2), n2 represents a number of 1 to 100; $Y^1$ represents $[R^{21}R^{22}N(CH_2)_mNR^{23}R^{24}]$, piperazine, or a piperazine ring-containing diamine; $R^{21}$, $R^{22}$, $R^{23}$, and $R^{24}$ each independently represent a hydrogen atom, or a linear or branched alkyl group having 1 to 5 carbon atoms; m represents an integer of 1 to 10; and q represents a number satisfying $0 < q \leq n2 + 2$.

In the flame retardant agent composition of the present invention, d preferably satisfies equation (II):

$$0.20 \leq d \leq 0.80 \quad (II).$$

It is preferred that the flame retardant agent composition of the present invention contain the phosphate compound represented by Formula (1) where $X^1$ is melamine.

It is also preferred that the flame retardant agent composition of the present invention contain the phosphate compound represented by Formula (2) where $Y^1$ is piperazine.

Further, it is preferred that the flame retardant agent composition of the present invention contain the phosphate compound represented by Formula (1) where $X^1$ is ammonia.

Still further, it is preferred that the flame retardant agent composition of the present invention contain the phosphate compound represented by Formula (1) where $X^1$ is melamine, and the phosphate compound represented by Formula (2) where $Y^1$ is piperazine.

Yet still further, it is preferred that the flame retardant agent composition of the present invention contain the phosphate compound represented by Formula (1) where n1 is 2 and the phosphate compound represented by Formula (2) where n2 is 2.

According to the present invention, a flame-retardant resin composition which contains the flame retardant

agent composition and a thermoplastic resin is also provided.

In the flame-retardant resin composition of the present invention, the thermoplastic resin preferably contains a polyolefin resin.

Moreover, according to the present invention, a molded article containing the flame-retardant resin composition is provided.

EFFECTS OF THE INVENTION

According to the present invention, the following can be provided: a flame retardant agent composition which has excellent flame retardancy as well as an excellent balance of dust suppression and powder flowability; a flame-retardant resin composition containing the same; and a molded article thereof.

BRIEF DESCRIPTION OF THE DRAWING

FIG. 1 is a drawing that schematically illustrates the apparatus used for evaluating the dust scattering property in Examples.

MODE FOR CARRYING OUT THE INVENTION

The present invention will now be described in detail based on preferred embodiments thereof.

<Flame Retardant Agent Composition>

The flame retardant agent composition of the present invention contains at least one phosphate compound represented by Formula (1) or (2).

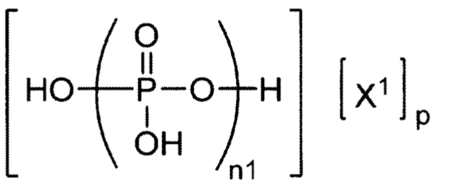

(1)

In Formula (1), n1 represents a number of 1 to 100; $X^1$ represents ammonia or a triazine derivative represented by Formula (1-A); and p represents a number satisfying $0 < p \leq n1 + 2$.

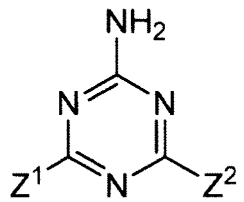

(1 − A)

In Formula (1-A), $Z^1$ and $Z^2$ each independently represent a group selected from the group consisting of a $-NR^{11}R^{12}$ group, a hydroxy group, a mercapto group, a linear or branched alkyl group having 1 to 10 carbon atoms, a linear or branched alkoxy group having 1 to 10 carbon atoms, a phenyl group, and a vinyl group; and $R^{11}$ and $R^{12}$ each independently represent a hydrogen atom, a linear or branched alkyl group having 1 to 6 carbon atoms, or a methylol group.

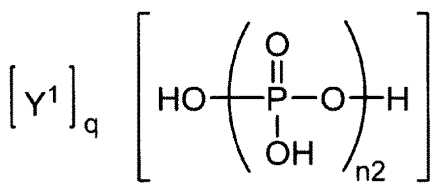

(2)

In Formula (2), n2 represents a number of 1 to 100; $Y^1$ represents $[R^{21}R^{22}N(CH_2)_mNR^{23}R^{24}]$, piperazine, or a piperazine ring-containing diamine; $R^{21}$, $R^{22}$, $R^{23}$, and $R^{24}$ each independently represent a hydrogen atom, or a linear

or branched alkyl group having 1 to 5 carbon atoms; m represents an integer of 1 to 10; and q represents a number satisfying $0 < q \leq n2 + 2$.

Examples of the linear or branched alkyl group having 1 to 10 carbon atoms that are represented by $Z^1$ and $Z^2$ in Formula (1-A) include methyl, ethyl, propyl, isopropyl, butyl, *sec*-butyl, *tert*-butyl, isobutyl, pentyl, isopentyl, *tert*-pentyl, neopentyl, hexyl, cyclohexyl, heptyl, isoheptyl, *tert*-heptyl, *n*-octyl, isooctyl, *tert*-octyl, 2-ethylhexyl, nonyl, and decyl. Examples of the linear or branched alkoxy group having 1 to 10 carbon atoms that are represented by $Z^1$ and $Z^2$ in Formula (1-A) include groups derived from the above-exemplified alkyl groups. Further, examples of the linear or branched alkyl group having 1 to 6 carbon atoms that are represented by $R^{11}$ and $R^{12}$ in the $-NR^{11}R^{12}$ group optionally represented by $Z^1$ and $Z^2$ in Formula (1-A) include those alkyl groups having 1 to 6 carbon atoms among the above-exemplified alkyl groups.

Specific examples of the triazine derivative represented by Formula (1-A) include melamine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, and 2-amino-4,6-dimercapto-1,3,5-triazine.

The compound represented by Formula (1) may be a single compound, or a mixture of two or more compounds that are different in condensation degree or salt type. Particularly, the compound represented by Formula (1) preferably contains one or more of a phosphate compound represented by Formula (1) where $X^1$ is melamine and a phosphate compound represented by Formula (1) where $X^1$ is ammonia. Further, the phosphate compound preferably contains a pyrophosphate represented by Formula (1) where n1 is 2. When the phosphate compound is used in the form of a mixture, the higher the content ratio of the pyrophosphate represented by Formula (1) where n1 is 2, the more preferred it is. By this, the heat resistance can be stably improved.

In Formula (2), the compound represented by $Y^1$ is, for example, $[R^{21}R^{22}N(CH_2)_mNR^{23}R^{24}]$, piperazine, or a piperazine ring-containing diamine. $R^{21}$ to $R^{24}$ may be the same or different and each represents a hydrogen atom or a linear or branched alkyl group having 1 to 5 carbon atoms.

Examples of the linear or branched alkyl group having 1 to 5 carbon atoms that are represented by $R^{21}$ to $R^{24}$ include those alkyl groups having 1 to 5 carbon atoms among the alkyl groups that are mentioned above as specific examples of the alkyl group represented by $Z^1$ and $Z^2$.

Examples of the piperazine ring-containing diamine include: compounds obtained by substituting one or more of the 2-, 3-, 5-, and 6-positions of piperazine with an alkyl group (preferably an alkyl group having 1 to 5 carbon atoms); and compounds obtained by substituting the amino group(s) at the 1- and/or the 4-position(s) of piperazine with an alkyl group (preferably an alkyl group having 1 to 5 carbon atoms).

Specific examples of the compound represented by $Y^1$ in Formula (2) include *N*,*N*,*N*,*N*-tetramethyldiaminomethane, ethylenediamine, *N*,*N*-dimethylethylenediamine, *N*,*N*'-diethylethylenediamine, *N*,*N*-dimethylethylenediamine, *N*,*N*-diethylethylenediamine, *N*,*N*,*N'*,*N'*-tetramethylethylenediamine, *N*,*N*,*N'*,*N'*-tetraethylethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, piperazine, *trans*-2,5-dimethylpiperazine, 1,4-bis(2-aminoethyl)piperazine, and 1,4-bis(3-aminopropyl)piperazine.

The compound represented by Formula (2) may be a single compound, or a mixture of two or more compounds that are different in condensation degree or salt type. It is preferred that the phosphate compound contain a phosphate compound represented by Formula (2) where $Y^1$ is piperazine. It is also preferred that the phosphate compound contain a pyrophosphate represented by Formula (2) where n2 is 2. When the phosphate compound is used in the form of a mixture, the higher the content ratio of the pyrophosphate where n2 is 2, the more preferred it is. By this, the heat resistance can be stably improved.

As for a method of producing the phosphate compound, for example, a salt of phosphoric acid and melamine, such as melamine pyrophosphate, can be obtained by mixing sodium pyrophosphate and melamine at an arbitrary ratio, subsequently allowing them to react with each other by adding thereto hydrochloric acid, and then neutralizing the resultant with sodium hydroxide. Further, for example, a salt of phosphoric acid and piperazine can be easily obtained as a water-insoluble precipitate by allowing phosphoric acid and piperazine to react with each other at an arbitrary ratio in water or an aqueous methanol solution. In this process, the constitution of the raw material phosphoric acid is not particularly limited. Moreover, a phosphate compound represented by Formula (1) or (2) where n1 or n2 is 2 or more may be obtained by heat-condensation of an orthophosphate where n1 or n2 is 1.

From the above, the phosphate compound is obtained. This phosphate compound may be used singly, or two or more thereof may be used in combination. A flame retardant agent composition containing such a phosphate compound can impart excellent flame retardancy to a resin material.

From the standpoint of flame retardancy, the flame retardant agent composition of the present invention preferably contains both of a phosphate compound represented by Formula (1) and a phosphate compound represented by Formula (2).

Particularly, it is preferred to use a combination of a phosphate compound represented by Formula (1) where $X^1$ is melamine and a phosphate compound represented by Formula (2) where $Y^1$ is piperazine. It is also preferred to use a combination of a phosphate compound represented by Formula (1) where n1 is 2 and a phosphate compound represented by Formula (2) where n2 is 2.

When the flame retardant agent composition of the present invention contains both a phosphate compound represented by Formula (1) and a phosphate compound represented by Formula (2), from the standpoint of flame retardancy, the content ratio of these phosphate compounds is, in terms of mass ratio of the former to the latter, preferably 20:80 to 60:40, more preferably 25:75 to 55:45, still more preferably 30:70 to 50:50.

As described above, according to the studies conducted by the present inventors, it was found that the bulk density of a flame retardant agent composition affects the dust scattering property.

Generally, it is believed that the smaller the bulk density of powder, the higher the dust scattering property of the powder is. However, as a result of the studies conducted by the present inventors, surprisingly, the flame retardant agent composition of the present invention which contains the above-described specific phosphate compound was found to exhibit an opposite result. In other words, it was found that scattering of the flame retardant agent composition was increased when the flame retardant agent composition had a high loose bulk density.

Based on this finding, the present inventors further intensively studied and consequently revealed that suppression of dust scattering and good powder flowability can be both achieved in a flame retardant agent composition by controlling the ratio of the loose bulk density and the particle size distribution width of the flame retardant agent composition to be equal to or higher than a prescribed value and equal to or lower than a prescribed value. In other words, simple suppression of the dust scattering property of a powder presents a concern for adversely affecting the powder flowability; however, as a result of the studies conducted by the present inventors, it was revealed that suppression of dust scattering and good powder flowability can both be achieved by appropriately setting the ratio of the loose bulk density and the particle size distribution width.

Therefore, according to the flame retardant agent composition of the present invention, dust scattering is suppressed, so that deterioration of the working environment caused by dust can be inhibited. In addition, since the flame retardant agent composition of the present invention exhibits good powder flowability, it is unlikely to adversely affect the productivity and the dispersibility thereof when mixed with a resin material.

In the flame retardant agent composition of the present invention, when the loose bulk density of the flame retardant agent composition is defined as d (g/$cm^3$), and the 10% cumulative particle size and the 50% cumulative particle size of the flame retardant agent composition in a volume-based particle size distribution are defined as $D_{10}$ ($\mu$m) and $D_{50}$ ($\mu$m), respectively, d, $D_{10}$ ($\mu$m), and $D_{50}$ ($\mu$m) satisfy equation (I):

$$0.030 \leq d/(D_{50} - D_{10}) \leq 0.110 \qquad (I).$$

In equation (I), a lower limit value of $d/(D_{50} - D_{10})$ is 0.030 or larger, preferably 0.035 or larger, more preferably 0.040 or larger. By this, the powder flowability can be improved. Meanwhile, in equation (I), an upper limit value of $d/(D_{50} - D_{10})$ is 0.110 or less, preferably 0.107 or less, more preferably 0.103 or less. By this, excessive dust scattering can be suppressed.

It is noted here that the "loose bulk density d" is a packing density of a powder in a state of being allowed to fall naturally. The loose bulk density can be determined by, for example, dropping an appropriate amount of a powder composition into a prescribed 100-$cm^3$ cylindrical container from an upper open end of the container to loosely pack the container with the powder composition, reading the mass (g) and the volume ($cm^3$) of the packed powder composition, and then calculating the mass (g) of the powder composition per volume ($cm^3$). The loose bulk density may be measured using a commercially available powder property analyzer.

Further, the 10% cumulative particle size $D_{10}$ and the 50% cumulative particle size $D_{50}$ of the flame retardant agent composition in its volume-based particle size distribution can be determined by, for example, performing the measurement thereof for the flame retardant agent composition that has been dispersed in methanol and ultrasonicated, using a laser diffraction-scattering particle size distribution analyzer.

In the flame retardant agent composition of the present invention, the value of the loose bulk density d preferably satisfies equation (II):

$$0.20 \leq d \leq 0.80 \quad (II).$$

In equation (II), a lower limit value of d is 0.20 or larger, preferably 0.25 or larger, more preferably 0.30 or larger. By this, the powder flowability can be improved. Meanwhile, an upper limit value of d is 0.80 or less, preferably 0.70 or less, more preferably 0.60 or less, still more preferably 0.55 or less, particularly preferably 0.50 or less. By this, excessive

dust scattering can be inhibited.

The loose bulk density d, 10% cumulative particle size $D_{10}$, and 50% cumulative particle size $D_{50}$ can be controlled by, for example, appropriately selecting a preparation method and the like, such as methods of pulverization and classification. Particularly, examples of elements for controlling the d, $D_{10}$, and $D_{50}$ to be in the respective desired numerical ranges include: appropriate selection of pulverization conditions, such as pulverization method and pulverization time; classification conditions, such as conditions for cutting coarse particles; and blending conditions. The d, $D_{10}$, and $D_{50}$ can also be controlled by appropriately selecting the presence or absence of a surface treatment, or a surface treatment agent. Examples of the surface treatment agent include the below-described surface treatment agents, dust suppressants, and lubricants.

Examples of pulverization means for the pulverization include a mortar, a ball mill, a rod mill, a tube mill, a conical mill, a vibrating ball mill, a high-swing ball mill, a roller mill, a pin mill, a hummer mill, an attrition mill, a jet mill, a j etmizer, a micronizer, a nanomizer, a Majac mill, a microatomizer, a colloid mill, a Premier colloid mill, a micron mill, a Charlotte colloid mill, a rotary cutter, a dry-medium stirring mill, an impact-type ultrafine pulverizer, a planetary mill, a bead mill, a microbead mill, an attritor, and a crushing roll. These pulverization means can be used singly, or in combination of two or more thereof.

Examples of means for the classification include: dry classification, such as sieving classification, inertial classification, and centrifugal classification; and wet classification such as precipitation classification. The pulverization and the classification may be performed simultaneously using a pulverizer having a built-in classification function.

When the flame retardant agent composition of the present invention is a mixture of plural components, these constituent components may each be prepared through the preparation step such as pulverization and classification and then mixed, or the constituent components may be mixed and then the preparation step such as pulverization and classification may be performed.

The flame retardant agent composition of the present invention may also contain an auxiliary agent.

Examples of the auxiliary agent include a flame retardant aid, an anti-drip aid, and a processing aid.

The flame retardant aid may contain a metal oxide and a polyhydric alcohol. By this, the flame retardancy of a resin can be improved.

Examples of the metal oxide include titanium oxide, zinc oxide, calcium oxide, magnesium oxide, zirconium oxide, barium oxide, tin dioxide, lead dioxide, antimony oxide, molybdenum oxide, and cadmium oxide. These metal oxides may be used singly, or in combination of two or more thereof. By this, the flame retardancy of a resin can be improved. In addition, the occurrence of aggregation can be inhibited in the flame retardant agent composition in a granular form. Among the above-exemplified metal oxides, zinc oxide is preferred from the standpoint of flame retardancy.

The zinc oxide may be surface-treated but does not have to be surface-treated. As the zinc oxide, specifically, for example, a commercially available product such as Zinc Oxide Type 1 (manufactured by Mitsui Mining and Smelting Co., Ltd.), partially coated-type zinc oxide (manufactured by Mitsui Mining and Smelting Co., Ltd.), NANOFINE 50 (ultrafine particulate zinc oxide having an average particle size of 0.02 μm, manufactured by Sakai Chemical Industry Co., Ltd.), or NANOFINE K (zinc silicate-coated ultrafine particulate zinc oxide having an average particle size of 0.02 μm, manufactured by Sakai Chemical Industry Co., Ltd.) may be used.

The polyhydric alcohol compound is a compound in which plural hydroxy groups are bound, and examples thereof include pentaerythritol, dipentaerythritol, tripentaerythritol, polypentaerythritol, neopentyl glycol, trimethylolpropane, ditrimethylolpropane, 1,3,5-tris(2-hydroxyethyl)isocyanurate (THEIC), polyethylene glycol, glycerin, diglycerin, mannitol, maltitol, lactitol, sorbitol, erythritol, xylitol, xylose, sucrose, trehalose, inositol, fructose, maltose, and lactose. Among these polyhydric alcohol compounds, at least one selected from the group consisting of pentaerythritol and pentaerythritol condensates, such as pentaerythritol, dipentaerythritol, tripentaerythritol, and polypentaerythritol, is preferred, dipentaerythritol or a pentaerythritol condensate is particularly preferred, and dipentaerythritol is most preferred. Further, THEIC and sorbitol can be suitably used as well. These polyhydric alcohol compounds may be used singly, or in combination of two or more thereof.

The anti-drip aid is, for example, a layered silicate, a fluorine-based anti-drip aid, or a silicone rubber. By using the anti-drip aid, dripping during combustion of a resin can be inhibited.

The layered silicate is a layered silicate mineral which may be either naturallyoccurring or synthetic and is not particularly limited. Examples of the layered silicate include: smectite-type clay minerals, such as montmorillonite, saponite, hectorite, beidellite, stevensite, and nontronite; vermiculite; halloysite; swellable mica; and talc. These layered silicates may be used singly, or in combination of two or more thereof. Among these layered silicates, saponite or talc is preferred from the standpoint of drip inhibition, and talc is particularly preferred from the standpoint of economic efficiency such as price.

The layered silicate may contain a cation between its layers. The cation may be a metal ion, and a part or the entirety of the cation may be a cation other than a metal ion, such as an organic cation, a (quaternary) ammonium cation, or a phosphonium cation.

Examples of the metal ion include a sodium ion, a potassium ion, a calcium ion, a magnesium ion, a lithium

ion, a nickel ion, a copper ion, and a zinc ion.

Examples of the organic cation or the quaternary ammonium cation include a lauryltrimethyl ammonium cation, a stearyltrimethyl ammonium cation, a trioctylmethyl ammonium cation, a distearyldimethyl ammonium cation, a di-hardened beef tallow-dimethyl ammonium cation, and a distearyldibenzyl ammonium cation. These cations may be used singly, or in combination of two or more thereof.

Specific examples of the fluorine-based anti-drip aid include: fluorocarbon resins, such as polytetrafluoroethylene, polyvinylidene fluoride, and polyhexafluoropropylene; and alkali metal salts of perfluoroalkanesulfonic acids and alkaline earth metal salts of perfluoroalkanesulfonic acids, such as sodium perfluoromethanesulfonate, potassium perfluoro-n-butanesulfonate, potassium perfluoro-t-butanesulfonate, sodium perfluorooctanesulfonate, and calcium perfluoro-2-ethylhexanesulfonate. Thereamong, polytetrafluoroethylene is preferred from the standpoint of drip inhibition. These fluorine-based anti-drip aids may be used singly, or in combination of two or more thereof.

The processing aid can be selected as appropriate from known processing aids, and may include an acrylic acid-based processing aid.

Examples of the acrylic acid-based processing aid include: homopolymers and copolymers of alkyl methacrylates, such as methyl methacrylate, ethyl methacrylate, and butyl methacrylate; copolymers of any of the above alkyl methacrylates with an alkyl acrylate such as methyl acrylate, ethyl acrylate, or butyl acrylate; copolymers of any of the above alkyl methacrylates with an aromatic vinyl compound such as styrene, $\alpha$-methylstyrene, or vinyltoluene; and copolymers of any of the above alkyl methacrylates with a vinyl cyan compound such as acrylonitrile or methacrylonitrile. These acrylic acid-based processing aids may be used singly, or in combination of two or more thereof.

The flame retardant agent composition may also contain a surface treatment agent.

The surface treatment agent is, for example, a silicone oil or a silane coupling agent. By using the silicone oil, aggregation of the powder-form flame retardant agent composition can be inhibited, and the storage stability as well as the dispersibility in a synthetic resin can be improved. In addition, the water resistance can be enhanced.

As the silicone oil, any known silicone oil having a polysiloxane skeleton can be used without any particular limitation. The silicone oil may be a polymer having a linear polysiloxane skeleton in which all of the side chains of polysiloxane may be methyl groups, or some of the side chains may have a phenyl group, and some of the side chains may have hydrogen.

Examples of the silicone oil include: dimethyl silicone oil in which the side chains and the terminals of polysiloxane are all methyl groups; methylphenyl silicone oil in which the side chains and the terminals of polysiloxane are methyl groups, with some of which side chains being phenyl groups; methyl hydrogen silicone oil in which the side chains and the terminals of polysiloxane are methyl groups, with some of which side chains being hydrogen; and copolymers thereof. These silicone oils may be partially modified by epoxy modification, amino modification, carboxy modification, or the like. These silicone oils may be used singly, or in combination of two or more thereof.

Among the silicone oils, from the standpoint of inhibiting aggregation of the powder-form flame retardant agent composition and improving the storage stability and the dispersibility in a synthetic resin, dimethyl silicone oil and methyl hydrogen silicone oil are preferred, and methyl hydrogen silicone oil is more preferred.

Examples of the silane coupling agent include: alkenyl group-containing silane coupling agents, such as vinyltrimethoxysilane, vinyltriethoxysilane, vinyltriacetoxysilane, vinyltris(2-methoxyethoxy)silane, vinylmethyldimethoxysilane, octenyltrimethoxysilane, allyltrimethoxysilane, and *p*-styryltrimethoxysilane; acryl group-containing silane coupling agents, such as 3-acryloxypropyltrimethoxysilane and 3-acryloxypropyltriethoxysilane; methacryl group-containing silane coupling agents, such as 3-methacryloxypropylmethyldimethoxysilane, 3-methacryloxypropyltrimethoxysilane, 3-methacryloxypropylmethyldiethoxysilane, 3-methacryloxypropyltriethoxysilane, and methacryloxyoctyltrimethoxysilane; epoxy group-containing silane coupling agents, such as 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and glycidoxyoctyltrimethoxysilane; amino group-containing silane coupling agents, such as *N*-2-(aminoethyl)-3-aminopropylmethyldimethoxysilane, *N*-2-(aminoethyl)-3-aminopropyltrimethoxysilane, 3-aminopropyltrimethoxysilane, 3-aminopropyltriethoxysilane, 3-triethoxysilyl-*N*-(1,3-dimethyl-butylidene)propylamine, *N*-phenyl-3-aminopropyltrimethoxysilane, *N*,*N*'-bis[3-(trimethoxysilyl)propyl]ethylenediamine, and a hydrochloride of *N*-(vinylbenzyl)-2-aminoethyl-3-aminopropyltrimethoxysilane; isocyanurate group-containing silane coupling agents, such as tris(trimethoxysilylpropyl)isocyanurate; mercapto group-containing silane coupling agents, such as 3-mercaptopropylmethyldimethoxysilane, 3-mercaptopropyltrimethoxysilane, and 3-mercaptopropyltriethoxysilane; ureido group-containing silane coupling agents, such as 3-ureidopropyltrimethoxysilane and 3-ureidopropyltriethoxysilane; sulfide group-containing silane coupling agents, such as bis(triethoxysilylpropyl)tetrasulfide; thioester group-containing silane coupling agents, such as 3-octanoylthio-1-propyltriethoxysilane; and isocyanate group-containing silane coupling agents, such as 3-isocyanate propyltriethoxysilane and 3-isocyanate propyltrimethoxysilane. These silane coupling agents may be used singly, or in combination of two or more thereof.

Among these silane coupling agents, from the standpoint of enhancing the flame retardancy and the ease of handling as well as inhibiting aggregation of the powder-form flame retardant agent composition and thereby improving

the storage stability, epoxy group-containing silane coupling agents are preferred, and 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and glycidoxyoctyltrimethoxysilane are more preferred.

Examples of a method of adding the surface treatment agent include a method of mixing the flame retardant agent composition in a granular form with the surface treatment agent, and a method of spray-drying and then adding/mixing the surface treatment agent with the flame retardant agent composition. Alternatively, the surface treatment agent may be added to the flame retardant agent composition through surface treatment of some of the components constituting the flame retardant agent composition.

The flame retardant agent composition may also contain a dust suppressant.

Examples of the dust suppressant include aliphatic dicarboxylic acid ether ester compounds and the silane coupling agents.

The aliphatic dicarboxylic acid ether ester compounds may include a compound represented by Formula (3) below. By this, dust of the flame retardant agent composition in a granular form can be suppressed. These dust suppressants may be used singly, or in combination of two or more thereof.

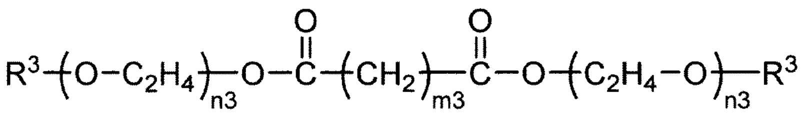

(3)

In Formula (3), n3 represents an integer of 1 to 3; m3 represents an integer of 2 to 6; and $R^3$ represents an alkyl group having 1 to 6 carbon atoms.

In Formula (3), the alkyl group having 1 to 6 carbon atoms that are represented by $R^3$ may be a linear alkyl group or a branched alkyl group, and examples thereof include methyl, ethyl, propyl, isopropyl, butyl, isobutyl, *sec*-butyl, *tert*-butyl, amyl, isoamyl, *tert*-amyl, and hexyl. From the standpoint of flame retardancy and particularly ease of handling and storage stability, $R^3$ is preferably a butyl group.

Further, in Formula (3), from the standpoint of flame retardancy and particularly ease of handling and storage stability, n3 is preferably 2. Moreover, in Formula (3), from the standpoint of flame retardancy and particularly ease of handling and storage stability, m3 is preferably 4.

The flame retardant agent composition may also contain other components within a range that does not impair the effects of the present invention. As the other components, additives normally used for modifying a thermoplastic resin can be used, and examples thereof include an antioxidant, a light stabilizer, an ultraviolet absorber, a crystal nucleating agent, a clarifying agent, a plasticizer, a lubricant, a flame retardant agent other than the phosphate compounds of the present invention, a reinforcing material, a cross-linking agent, an antistatic agent, a metallic soap, a filler, an antifogging agent, a plate-out inhibitor, a fluorescent agent, an antifungal agent, an antibacterial agent, a foaming agent, a metal inactivator, a mold release agent, a pigment, and a dye. These additives may be used singly, or in combination of two or more thereof.

The antioxidant is, for example, a phenolic antioxidant, a phosphite-based antioxidant, a thioether-based antioxidant, or other antioxidant.

Examples of the phenolic antioxidant include 2,6-di-*tert*-butyl-*p*-cresol, 2,6-diphenyl-4-octadecyloxyphenol, distearyl(3,5-di-*tert*-butyl-4-hydroxybenzyl)phosphonate, 1,6-hexamethylene-bis[(3,5-di-*tert*-butyl-4-hydroxyphenyl)promionic acid amide], 4,4'-thiobis(6-*tert*-butyl-*m*-cresol), 2,2'-methylene-bis(4-methyl-6-*tert*-butylphenol), 2,2'-methylene-bis(4-ethyl-6-*tert*-butylphenol), 4,4'-butylidene-bis(6-*tert*-butyl-*m*-cresol), 2,2'-ethylidene-bis(4,6-di-*tert*-butylphenol), 2,2'-ethylidene-bis(4-*sec*-butyl-6-*tert*-butylphenol), 1,1,3-tris(2-methyl-4-hydroxy-5-*tert*-butylphenyl)butane, 1,3,5-tris(2,6-dimethyl-3-hydroxy-4-*tert*-butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 2-*tert*-butyl-4-methyl-6-(2-acryloyloxy-3-*tert*-butyl-5-methylbenzyl)phenol, stearyl(3,5-di-*tert*-butyl-4-hydroxyphenyl)propionate, pentaerythritol tetrakis[3-(3,5-di-*tert*-butyl-4-hydroxyphenyl)propionate], thiodiethylene glycol bis[(3,5-di-*tert*-butyl-4-hydroxyphenyl)propionate], 1,6-hexamethylene-bis[(3,5-di-*tert*-butyl-4-hydroxyphenyl)propionate], bis[3,3-bis(4-hydroxy-3-*tert*-butylphenyl)butyric acid]glycol ester, bis[2-*tert*-butyl-4-methyl-6-(2-hydroxy-3-tert-butyl-5-methylbenzyl)phenyl]terephthalate, 1,3,5-tris[(3,5-di-*tert*-butyl-4-hydroxyphenyl)propionyloxyethyl]isocyanurate, 3,9-bis[1,1-dimethyl-2-{(3-*tert*-butyl-4-hydroxy-5-methylphenyl)propionyloxy}ethyl]-2,4,8,10-tetraoxaspiro[5,5]undecane, and triethylene glycol bis[(3-*tert*-butyl-4-hydroxy-5-methylphenyl)propionate]. These phenolic antioxidants may be used singly, or in combination of two or more thereof.

Examples of the phosphite-based antioxidant include trisnonylphenyl phosphite, tris[2-*tert*-butyl-4-(3-*tert*-butyl-4-hydroxy-5-methylphenylthio)-5-methylphenyl]phosphite, tridecyl phosphite, octyl diphenyl phosphite, didecyl monophenyl phosphite, di(tridecyl)pentaerythritol diphosphite, di(nonylphenyl)pentaerythritol diphosphite, bis(2,4-di-*tert*-butylphenyl)pentaerythritol diphosphite, bis(2,6-di-*tert*-butyl-4-methylphenyl)pentaerythritol diphosphite, bis(2,4,6-tri-*tert*-butylphenyl)pentaerythritol diphosphite, bis(2,4-dicumylphenyl)pentaerythritol diphosphite, tetra(tridecyl)isopropylidenediphenol diphosphite, tetrakis(tridecyl)isopropylidenediphenol diphosphite, tetrakis(tridecyl)-4,4'-*n*-butylidene-bis(2-*tert*-butyl-5-methylphenol)diphosphite, hexakis(tridecyl)-1,1,3-tris(2-methyl-4-hydroxy-5-*tert*-butylphenyl)butane triphosphite, tetrakis(2,4-di-*tert*-butylphenyl)biphenylene diphosphonite, 9,10-dihydro-9-oxa-10-phosphaphenanthrene-10-oxide, 2,2'-methylene-bis(4,6-*tert*-butylphenyl)-2-ethylhexyl phosphite, 2,2'-methylene-bis(4,6-*tert*-butylphenyl)-octadecyl phosphite, 2,2'-ethylidene-bis(4,6-di-*tert*-butylphenyl)fluorophosphite, tris(2-[(2,4,8,10-tetrakis-*tert*-butyldibenzo[d,f] [1,3,2]dioxaphosphepin-6-yl)oxy]ethyl)amine, and phosphite of 2-ethyl-2-butyl propylene glycol and 2,4,6-tri-*tert*-butylphenol. These phosphite-based antioxidants may be used singly, or in combination of two or more thereof.

Examples of the thioether-based antioxidant include 3,3'-thiodipropionic acid, alkyl (C12-14) thiopropionate, di(lauryl)-3,3'-thiodipropionate, di(tridecyl)-3,3'-thiodipropionate, di(myristyl)-3,3'-thiodipropionate, di(stearyl)-3,3'-thiodipropionate, di(octadecyl)-3,3'-thiodipropionate, laurylstearyl thiodipropionate, tetrakis[methylene-3-(dodecylthio)propionate]methane, thiobis(2-*tert*-butyl-5-methyl-4,1-phenylene)bis(3-(dodecylthio)propionate), 2,2'-thiodiethylene-bis(3-aminobutanoate), 4,6-bis(octylthiomethyl)-*o*-cresol, 2,2'-thiodiethylene-bis[3-(3,5-di-*tert*-butyl-4-hydroxyphenyl)propionate], 2,2'-thiobis(4-methyl-6-*tert*-butylphenol), 2,2'-thiobis(6-tert-butyl-*p*-cresol), 2-ethylhexyl-(3,5-di-*tert*-butyl-4-hydroxybenzyl)thioacetate, 4,4'-thiobis(6-*tert*-butyl-3-methylphenol), 4,4'-thiobis(4-methyl-6-*tert*-butylphenol), 4,4'-[thiobis(methylene)]bis(2-*tert*-butyl-6-methyl-1-hydroxybenzyl), bis(4,6-di-*tert*-butylphenol-2-yl)sulfide, tridecyl-3,5-di-*tert*-butyl-4-hydroxybenzyl thioacetate, 1,4-bis(octylthiomethyl)-6-methylphenol, 2,4-bis(dodecylthiomethyl)-6-methylphenol, distearyl disulfide, and bis(methyl-4-[3-*n*-alkyl(C12/C14)thiopropionyloxy]-5-tert-butylphenyl)sulfide. These thioether-based antioxidants may be used singly, or in combination of two or more thereof.

Examples of the other antioxidant include: nitrone compounds, such as *N*-benzyl-$\alpha$-phenyl nitrone, *N*-ethyl-$\alpha$-methyl nitrone, *N*-octyl-$\alpha$-heptyl nitrone, *N*-lauryl-$\alpha$-undecyl nitrone, *N*-tetradecyl-$\alpha$-tridecyl nitrone, *N*-hexadecyl-$\alpha$-pentadecyl nitrone, *N*-octyl-$\alpha$-heptadecyl nitrone, *N*-hexadecyl-$\alpha$-heptadecyl nitrone, *N*-octadecyl-$\alpha$-pentadecyl nitrone, *N*-heptadecyl-$\alpha$-heptadecyl nitrone, and *N*-octadecyl-$\alpha$-heptadecyl nitrone; and benzofuran compounds, such as 3-arylbenzofuran-2(3H)-one, 3-(alkoxyphenyl)benzofuran-2-one, 3-(acyloxyphenyl)benzofuran-2(3H)-one, 5,7-di-*tert*-butyl-3-(3,4-dimethylphenyl)-benzofuran-2(3H)-one, 5,7-di-*tert*-butyl-3-(4-hydroxyphenyl)-benzofuran-2(3H)-one, 5,7-di-*tert*-butyl-3-{4-(2-hydroxyethoxy)phenyl}-benzofuran-2(3H)-one, 6-(2-(4-(5,7-di-*tert*-2-oxo-2,3-dihydrobenzofuran-3-yl)phenoxy)ethoxy)-6-oxohexyl-6-((6-hydroxyhexanoyl)oxy)hexanoate, and 5-di-*tert*-butyl-3-(4-((15-hydroxy-3,6,9,13-tetraoxapentadecyl)oxy)phenyl)benzofuran-2(3H)-one. These other antioxidants may be used singly, or in combination of two or more thereof.

Examples of the light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)·bis(tridecyl)-1,2,3,4-butanetetracarboxylate, bis(1,2,2,6,6-pentamethyl-4-piperidyl)-bis(tridecyl)-1,2,3,4-butanetetracarboxylate, bis(1,2,2,6,6-pentamethyl-4-piperidyl)-2-butyl-2-(3,5-di-*tert*-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensates, 1,6-bis(2,2,6,6-tetramethyl-4-piperidylamino)hexane/2,4-dichloro-6-*tert*-octylamino-s-triazine polycondensates, 1,5,8,12-tetrakis[2,4-bis(N-butyl-*N*-(2,2,6,6-tetramethyl-4-piperidyl)amino)-*s*-triazine-6-yl]-1,5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl]-1,5,8,12-tetraazadodecane, 1,6,11-tris[2,4-bis(*N*-butyl-*N*-(2,2,6,6-tetramethyl-4-piperidyl)amino)-s-triazine-6-ylamino]undecane, 1,6,11-tris[2,4-bis(*N*-butyl-*N*-(1,2,2,6,6-pentamethyl-4-piperidyl)amino)-s-triazine-6-ylamino]undecane, bis(2,2,6,6-tetramethyl-1-octyloxy-4-piperidyl)decanedioate, bis(2,2,6,6-tetramethyl-1-undecyloxypiperidin-4-yl)carbonate, 2,2,6,6-tetramethyl-4-piperidyl methacrylate, 1,2,3,4-butanetetracarboxylic acid, a polymer of 2,2-bis(hydroxymethyl)-1,3-propanediol and 3-hydroxy-2,2-dimethylpropanal, 1,2,2,6,6-pentamethyl-4-piperidinyl ester, 1,3-bis(2,2,6,6-tetramethylpiperidin-4-yl)-2,4-ditridecylbenzene-1,2,3,4-tetracarboxylate, bis(1-octyloxy-2,2,6,6-pentamethyl-4-piperidyl) sebacate, and poly[[6-[(1,1,3,3-tetramethylbutyl)amino]-1,3,5-triazine-2,4-diyl] [(2,2,6,6-tetramethyl-4-piperidinyl)imino]-1,6-hexanediyl[(2,2,6,6-tetramethyl-4-piperidinyl)imino]]), and TINUVIN NOR 371 manufactured by BASF Ltd. These light stabilizers may be used singly, or in combination of two or more thereof.

Examples of the ultraviolet absorber include; 2-hydroxybenzophenones, such as 2,4-dihydroxybenzophenone, 2-hydroxy-4-methoxybenzophenone, 2-hydroxy-4-octoxybenzophenone, and 5,5'-methylene-bis(2-hydroxy-4-methoxybenzophenone); 2-(2'-hydroxyphenyl)benzotriazoles, such as 2-(2'-hydroxy-5'-methylphenyl)benzotriazole, 2-(2'-hydroxy-3',5'-di-*tert*-butylphenyl)-5-chlorobenzotriazole, 2-(2'-hydroxy-3'-*tert*-butyl-5'-methylphenyl)-5-chlorobenzotriazole, 2-(2'-hydroxy-5'-*tert*-octylphenyl)benzotriazole, 2-(2'-hydroxy-3',5'-dicumylphenyl)benzotriazole, 2,2'-methylene-bis(4-*tert*-octyl-6-(benzotriazolyl)phenol), and 2-(2'-hydroxy-3'-*tert*-butyl-5'-carboxyphenyl)benzotriazole; benzoates, such as phenyl salicylate, resorcinol monobenzoate, 2,4-di-*tert*-butylphenyl-3,5-di-*tert*-butyl-4-hydroxybenzoate, 2,4-di-*tert*-amylphenyl-3,5-di-*tert*-butyl-4-hydroxybenzoate, and hexadecyl-3,5-di-*tert*-butyl-4-hydroxybenzoate; substituted oxanilides, such as 2-ethyl-2'-ethoxyoxanilide and 2-ethoxy-4'-dodecyloxanilide; cyanoacrylates, such as ethyl-α-cyano-$\beta,\beta$-diphenylacrylate and methyl-2-cyano-3-methyl-3-(*p*-methoxyphenyl)acrylate; and triaryltriazines, such as 2-(2-hydroxy-4-octoxyphenyl)-4,6-bis(2,4-di-*tert*-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-*tert*-butylphenyl)-s-triazine. These ultraviolet absorbers may be used singly, or in combination of two or more thereof.

Examples of the crystal nucleating agent include: metal carboxylates, such as sodium benzoate, 4-*tert*-butylbenzoate aluminum salt, sodium adipate, and 2-sodium-bicyclo[2.2.1]heptane-2,3-dicarboxylate; phosphate metal salts, such as sodium bis(4-*tert*-butylphenyl)phosphate, sodium 2,2'-methylene-bis(4,6-di-*tert*-butylphenyl)phosphate, and lithium 2,2'-methylene-bis(4,6-di-*tert*-butylphenyl)phosphate; polyhydric alcohol, such as dibenzylidene sorbitol, bis(methylbenzylidene)sorbitol, bis(3,4-dimethylbenzylidene)sorbitol, bis(*p*-ethylbenzylidene)sorbitol, bis(dimethylbenzylidene)sorbitol, 1,2,3-trideoxy-4,6:5,7-bis-O-((4-propylphenyl)methylene)nonitol, 1,3:2,4-bis(*p*-methylbenzylidene)sorbitol, and 1,3:2,4-bis-O-benzylidene-D-glucitol (dibenzylidene sorbitol); and amide compounds, such as *N*,*N*,*N*'-tris[2-methylcyclohexyl]-1,2,3-propane tricarboxamide, *N*,*N*',*N*''-tricyclohexyl-1,3,5-benzene tricarboxamide, *N*,*N*-dicyclohexyl-naphthalene dicarboxamide, and 1,3,5-tri(dimethylisopropoylamino)benzene. These crystal nucleating agents may be used singly, or in combination of two or more thereof.

Examples of the plasticizer include: epoxy-based plasticizers, such as epoxidized soybean oil, epoxidized linseed oil, and epoxidized fatty acid octyl esters; methacrylate-based plasticizers; polyester-based plasticizers, such as polycondensates of a dicarboxylic acid and a polyhydric alcohol, and polycondensates of a polycarboxylic acid and a polyhydric alcohol; polyether ester-based plasticizers, such as polycondensates of a dicarboxylic acid, a polyhydric alcohol, and an alkylene glycol, polycondensates of a dicarboxylic acid, a polyhydric alcohol, and an arylene glycol, polycondensates of a polycarboxylic acid, a polyhydric alcohol, and an alkylene glycol, and polycondensates of a polycarboxylic acid, a polyhydric alcohol, and arylene glycol; aliphatic ester-based plasticizers, such as adipic acid esters and succinic acid esters; and aromatic ester-based plasticizers, such as phthalic acid esters, terephthalic acid esters, trimellitic acid esters, pyromellitic acid esters, and benzoic acid esters. These plasticizers may be used singly, or in combination of two or more thereof.

Examples of the lubricant include: pure hydrocarbon-based lubricants, such as liquid paraffins, natural paraffins, microwaxes, synthetic paraffins, low-molecular-weight polyethylenes, and polyethylene waxes; halogenated hydrocarbon-based lubricants; fatty acid-based lubricants, such as higher fatty acids and oxy fatty acids; fatty acid amide-based lubricants, such as fatty acid amides and bis-fatty acid amides; ester-based lubricants, such as lower alcohol esters of fatty acids, polyhydric alcohol esters of fatty acids (e.g., glyceride), polyglycol esters of fatty acids, and fatty alcohol esters of fatty acids (ester waxes); metallic soaps; fatty alcohols; polyhydric alcohols; polyglycols; polyglycerols; partial esters composed of a fatty acid and a polyhydric alcohol; partial ester-based lubricants composed of fatty acid and polyglycol or polyglycerol; silicone oils; and mineral oils. These lubricants may be used singly, or in combination of two or more thereof.

Examples of the flame retardant agent other than the phosphate compounds of the present invention include: aromatic phosphates, such as triphenyl phosphate, tricresyl phosphate, trixylenyl phosphate, cresyl diphenyl phosphate, cresyl-2,6-dixylenyl phosphate, resorcinol-bis(diphenyl phosphate), (1-methylethylidene)-4,1-phenylene tetraphenyl diphosphate, and 1,3-phenylene-tetrakis(2,6-dimethylphenyl)phosphate, as well as "ADK STAB FP-500", "ADK STAB FP-600", "ADK STAB FP-800", and "ADK STAB FP-900L" (trade names, manufactured by ADEKA Corporation); phosphonates, such as divinyl phenylphosphonate, diallyl phenylphosphonate, and (1-butenyl) phenylphosphonate; phosphinates, such as phenyl diphenylphosphinate, methyl diphenylphosphinate, and 9,10-dihydro-9-oxa-10-phosphaphenanthlene-10-oxide derivatives; dialkyl phosphinates, such as aluminum diethylphosphinate and zinc diethylphosphinate; phosphazene compounds, such as bis(2-allylphenoxy)phosphazene and dicresyl phosphazene; inorganic phosphorus-based flame retardant agents, such as red phosphorus; metal hydroxides, such as magnesium hydroxide and aluminum hydroxide; and bromine-based flame retardant agents, such as brominated bisphenol A-type epoxy resins, brominated phenol novolac-type epoxy resins, hexabromobenzene, pentabromotoluene, ethylene-bis(pentabromophenyl), ethylene-bis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate, and brominated styrene. These other flame retardant agents may be used singly, or in combination of two or more thereof.

Examples of the antistatic agent include cationic antistatic agents, such as fatty acid quaternary ammonium ion salts and polyamine quaternary salts; anionic antistatic agents, such as higher alcohol phosphates, higher alcohol EO adducts, polyethylene glycol fatty acid esters, anionic alkyl sulfonates, higher alcohol sulfates, higher alcohol ethylene oxide adduct sulfates, and higher alcohol ethylene oxide adduct phosphates; nonionic antistatic agents, such as polyhydric alcohol fatty acid esters, polyglycol phosphates, and polyoxyethylene alkyl allyl ethers; and amphoteric antistatic agents, for example, amphoteric alkyl betaines such as alkyldimethylamino acetic acid betaines, and imidazoline-type amphoteric activators. These antistatic agents may be used singly, or in combination of two or more thereof.

Examples of the filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, mica, silica, alumina, potassium titanate whiskers, wollastonite, fibrous magnesium

oxysulfate, and montmorillonite, and any of these fillers can be used by appropriately selecting the particle size (the fiber diameter, the fiber length, and the aspect ratio in the case of a fibrous filler). These fillers may be used singly, or in combination of two or more thereof. Further, the filler to be used may be subjected to a surface treatment as required.

Examples of the pigment include: PIGMENT RED 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; PIGMENT ORANGE 13, 31, 34, 36, 38, 43, 46, 48, 49, 51, 52, 55, 59, 60, 61, 62, 64, 65, and 71; PIGMENT YELLOW 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; PIGMENT GREEN 7, 10, and 36; PIGMENT BLUE 15, 15:1, 15:2, 15:3, 15:4, 15:5, 15:6, 22, 24, 56, 60, 61, 62, and 64; PIGMENT VIOLET 1, 19, 23, 27, 29, 30, 32, 37, 40, and 50. These pigments may be used singly, or in combination of two or more thereof.

Examples of the dye include azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes, and cyanine dyes. These dyes may be used singly, or in combination of two or more thereof.

One or more of the auxiliary agents, surface treatment agents, dust suppressants, and other components may be blended into the above-described flame retardant agent composition, and may also be blended into a flame-retardant resin composition that contains the flame retardant agent composition and a thermoplastic resin.

The flame retardant agent composition of the present invention can be obtained by mixing at least one phosphate compound represented by Formula (1) or (2) and, as required, other optional components, under a condition of satisfying equation (I). For the mixing, a variety of mixing machines can be used. Heating may be performed during the mixing. Examples of the mixing machines that can be used include, but not particularly limited to: a tumbler mixer, a Henschel mixer, a ribbon blender, a V-type mixer, a W-type mixers, a super mixer, and a Nauta mixer.

Further, when the flame retardant agent composition obtained by the mixing does not satisfy equation (I), the flame retardant agent composition can be adjusted to satisfy equation (I) by, for example, adding thereto a surface treatment agent and/or a dust suppressant, and/or pulverizing the composition using a pulverizer.

<Flame-Retardant Resin Composition>

The flame-retardant resin composition of the present invention contains the flame retardant agent composition and a thermoplastic resin.

The content of the flame retardant agent composition may be in a range of usually 10 to 400 parts by mass, preferably 15 to 200 parts by mass, more preferably 20 to 70 parts by mass, with respect to 100 parts by mass of the thermoplastic resin. By this, the flame retardancy of the thermoplastic resin can be sufficiently improved.

Examples of the thermoplastic resin include synthetic resins, such as polyolefin resins, styrene resins, polyester resins, polyether resins, polycarbonate resins, polyamide resins, and halogen-containing resins. These resins may be used singly, or in combination of two or more thereof.

Examples of the thermoplastic resin also include: thermoplastic resins, such as petroleum resins, coumarone resins, polyvinyl acetates, acrylic resins, polymethyl methacrylates, polyvinyl alcohols, polyvinyl formals, polyvinyl butyrals, polyphenylene sulfides, polyurethanes, cellulose-based resins, polyimide resins, polysulfones, and liquid crystal polymers; and blends of these resins.

Further, the thermoplastic resin may be a thermoplastic elastomer such as an isoprene rubber, a butadiene rubber, an ethylene-propylene rubber, an ethylene-propylene-diene rubber, an acrylonitrile-butadiene copolymer rubber, a styrene-butadiene copolymer rubber, an olefin-based elastomer, a styrene-based elastomer, a polyester-based elastomer, a nitrile-based elastomer, a nylon-based elastomer, a vinyl chloride-based elastomer, a polyamide-based elastomer, or a polyurethane-based elastomer, and these thermoplastic elastomers may be used in combination.

Specific examples of the thermoplastic resin include, but not particularly limited: polyolefin resins, for example, $\alpha$-olefin polymers such as polypropylenes, high-density polyethylenes, low-density polyethylenes, linear low-density polyethylenes, polybutene-1, poly-3-methylpentene, poly-4-methylpentene, and ethylene-propylene block or random copolymers; thermoplastic linear polyester resins, such as polyethylene terephthalate, polybutylene terephthalate, and polyhexamethylene terephthalate; polysulfide resins, such as polyphenylene sulfide; polylactic acid resins, such as polycaprolactone; linear polyamide resins, such as polyhexamethylene adipamide; and crystalline polystyrene resins, such as syndiotactic polystyrene.

These thermoplastic resins can be used regardless of, for example, the molecular weight, the polymerization degree, the density, the softening point, the insoluble component-to-solvent ratio, the degree of stereoregularity, the presence or absence of a catalyst residue, the type and blend ratio of each monomer used as a raw material, and the type of a polymerization catalyst (e.g., a Ziegler catalyst or a metallocene catalyst).

Among these thermoplastic resins, one or more selected from the group consisting of polyolefin resins, polystyrene resins, and copolymers thereof are preferred, polyolefin resins are more preferred, and polypropylenes, high-density polyethylenes, low-density polyethylenes, and linear low-density polyethylenes are still more preferred, since excellent flame retardancy can be imparted to these resins. These thermoplastic resins are also preferably used in combination with a thermoplastic elastomer.

The flame-retardant resin composition may also contain, as required, one or more selected from additives consisting of the auxiliary agents, surface treatment agents, dust suppressants, and other components, in addition to the flame retardant agent composition. These additives may be used singly, or in combination of two or more thereof.

The content of the additives (excluding any filler and any flame retardant agent other than the phosphate compounds of the present invention) in the flame-retardant resin composition is, for example, 0.001 to 15 parts by mass, preferably 0.005 to 10 parts by mass, more preferably 0.01 to 5 parts by mass, with respect to 100 parts by mass of the thermoplastic resin. By controlling the content of the additives to be in this numerical range, the effects of the additives can be improved.

When a filler is incorporated into the flame-retardant resin composition, the content thereof is, for example, 1 to 100 parts by mass, preferably 3 to 80 parts by mass, more preferably 5 to 50 parts by mass, with respect to 100 parts by mass of the thermoplastic resin.

When a flame retardant agent other than the phosphate compounds of the present invention is incorporated into the flame-retardant resin composition, the content thereof is, for example, 1 to 200 parts by mass, preferably 3 to 150 parts by mass, more preferably 5 to 80 parts by mass, with respect to 100 parts by mass of the thermoplastic resin.

In the flame-retardant resin composition, when a polyolefin resin or an olefin-based elastomer is used as the thermoplastic resin, the flame-retardant resin composition preferably contains a known neutralizer for the purpose of neutralizing a catalyst residue in the resin, within a range that does not impair the effects of the present invention. Examples of the neutralizer include: fatty acid metal salts, such as calcium stearate, lithium stearate, sodium stearate, and magnesium stearate; fatty acid amide compounds, such as ethylene-bis(stearic acid amide), ethylene-bis(12-hydroxystearic acid amide), and stearic acid amide; and inorganic compounds such as hydrotalcite. These neutralizers may be used singly, or in combination of two or more thereof. These neutralizers are used in an amount of preferably 0.001 to 3 parts by mass, more preferably 0.01 to 1 part by mass, with respect to 100 parts by mass of the thermoplastic resin.

Next, a method of producing the flame-retardant resin composition will be described.

The flame-retardant resin composition can be obtained by mixing the flame retardant agent composition and thermoplastic resin. As required, the additives may be mixed therewith as well. The additives may be mixed into the flame retardant agent composition, or may be mixed into a mixture of the flame retardant agent composition and the thermoplastic resin.

As a mixing method, any commonly used and known method can be applied as is. Examples thereof include: a method of mixing the flame retardant agent composition, the thermoplastic resin and, as required, the additives using ordinary mixing equipment such as a blender or a mixer; a method of melt-kneading these components using an extruder or the like; and a method of mixing these components along with a solvent and subsequently casting the resulting solution.

The flame-retardant resin composition can be used in various forms, and may be, for example, in the form of pellets, granules, or powder. From the standpoint of the ease of handling, the flame-retardant resin composition is preferably in the form of pellets.

<Molded Article>

The molded article of the present invention contains the flame-retardant resin composition. The molded article can be produced by molding the flame-retardant resin composition.

A method for the molding is not particularly limited, and examples thereof include injection molding, extrusion molding, blow molding, rotational molding, vacuum molding, inflation molding, calender molding, slush molding, dip molding, foam molding, and additive manufacturing. Thereamong, injection molding, extrusion molding, and blow molding are preferred.

By these methods, molded articles of various shapes, such as resin plates, sheets, films, and special shape articles, can be produced.

A molded article containing the flame-retardant resin composition can be used for various applications, such as electric/electronic components, machine components, optical instruments, building members, automobile parts, and daily necessaries. Thereamong, from the standpoint of flame retardancy, the molded article can be suitably used for electric/electronic components and building members.

The flame-retardant resin composition and a molded article thereof can be used in a wide range of industrial fields, including the fields of electricity/electronics/communication, agriculture/forestry/fisheries, mining, construction, food, textiles, clothing, health care, coal, petroleum, rubber, leather, automobiles, precision instruments, wood materials, building materials, civil engineering, furniture, printing, and musical instruments. Specifically, the flame-retardant resin

composition of the present invention and a molded article thereof can be applied to, for example, office supplies and office-automation equipment, such as printers, personal computers, word processors, keyboards, PDA (Personal Digital Assistant) devices, telephones, copy machines, facsimile machines, ECRs (electronic cash registers), electronic calculators, electronic organizers, cards, holders, and stationery; home electric appliances, such as laundry machines, refrigerators, vacuum cleaners, microwave ovens, lighting fixtures, gaming machines, irons, and foot warmers; audio-visual equipment, such as TVs, video tape recorders, video cameras, radio-cassette players, tape recorders, mini discs, CD players, speakers, and liquid crystal displays; electric/electronic components and communication devices, such as connectors, relays, capacitors, switches, printed circuit boards, coil bobbins, semiconductor sealing materials, LED sealing materials, electric wires, cables, transformers, deflection yokes, distribution boards, and clocks.

The flame-retardant resin composition and a molded article thereof can also be used in various applications, including: materials of automobiles, vehicles, ships, airplanes, buildings, and houses, as well as construction and civil engineering materials, such as seats (e.g., stuffing and cover materials), belts, ceiling covers, convertible tops, armrests, door trims, rear package trays, carpets, mats, sun visors, wheel covers, mattress covers, air-bags, insulating materials, straps, strap belts, wire coating materials, electric insulating materials, paints, coating materials, veneer materials, floor materials, baffle walls, carpets, wallpapers, wall decorating materials, exterior materials, interior materials, roof materials, deck materials, wall materials, pillar materials, floor boards, fence materials, framing and moulding materials, window and door-shaping materials, shingle boards, sidings, terraces, balconies, soundproof boards, heat insulating boards, and window materials; and household articles and sporting goods, such as clothing materials, curtains, bed sheets, plywood boards, synthetic fiber boards, rugs, doormats, leisure sheets, buckets, hoses, containers, eye glasses, bags, casings, goggles, ski boards, rackets, tents, and musical instruments.

Thus far, embodiments of the present invention have been described; however, the embodiments are merely examples of the present invention, and the present invention can adopt various constitutions other than the ones. Further, the present invention is not limited to the embodiments and encompasses modifications, improvements, and the like as long as the object of the present invention can be achieved.

## EXAMPLES

The present invention will now be described in detail by way of Examples thereof; however, the present invention is not limited thereto by any means.

### <Production of Melamine Salt>

A melamine salt containing melamine pyrophosphate as a main component was produced by a heat condensation reaction of melamine orthophosphate in a solid-phase state at 220°C for 6 hours. The thus obtained melamine salt was used as is without purification. The purity of melamine pyrophosphate in the melamine salt was 98.5%.

### <Production of Piperazine Salt>

A piperazine salt containing piperazine pyrophosphate as a main component was produced by a heat condensation reaction of piperazine diphosphate in a solid-phase state at 250°C for 1 hour. The thus obtained piperazine salt was used as is without purification. The purity of piperazine pyrophosphate in the piperazine salt was 99.0%.

The purity of the melamine salt and that of the piperazine salt were measured using an ion chromatography analyzer ICS-2100 (manufactured by Thermo Fisher Scientific, Inc.) with a Dionex IonPac AS-19 column (manufactured by Thermo Fisher Scientific, Inc.) and an electrical conductivity detector.

### <Preparation of Composition A1>

Using a compact jet mill pulverizer (Co-Jet System $\alpha$-mkIII, manufactured by Seishin Enterprise Co., Ltd.), 40 parts by mass of the above-obtained melamine salt, 60 parts by mass of the above-obtained piperazine salt, and 0.4 parts by mass of a hydrotalcite (DHT-4A, manufactured by Kyowa Chemical Industry Co., Ltd.) were pulverized at a P nozzle pressure of 0.5 to 0.7 MPa, a G nozzle pressure of 0.5 to 0.65 MPa, and a sample input rate of 100 g/h, and subsequently mixed with 0.3 parts by mass of a methyl hydrogen silicone oil (KF-99, manufactured by Shin-Etsu Chemical Co., Ltd.) using a food mixer, followed by heating to 150°C in a heating oven. The resultant was allowed to cool to room temperature and then mixed with 0.3 parts by mass of a dimethyl silicone oil (KF-96, manufactured by Shin-Etsu Chemical Co., Ltd.) using a food mixer, whereby a composition A1 was obtained.

<Preparation of Composition A2>

Using a compact jet mill pulverizer (Co-Jet System α-mkIII, manufactured by Seishin Enterprise Co., Ltd.), 35 parts by mass of the above-obtained melamine salt, 5 parts by mass of melamine polyphosphate (PMP100, manufactured by Nissan Chemical Corporation), 60 parts by mass of the above-obtained piperazine salt, and 5 parts by mass of Zinc Oxide Type 1 (manufactured by Mitsui Mining and Smelting Co., Ltd.) were pulverized at a P nozzle pressure of 0.5 to 0.7 MPa, a G nozzle pressure of 0.5 to 0.65 MPa, and a sample input rate of 100 g/h, and subsequently mixed with 0.3 parts by mass of a methyl hydrogen silicone oil (KF-99, manufactured by Shin-Etsu Chemical Co., Ltd.) using a food mixer, followed by heating to 150°C in a heating oven. The resultant was allowed to cool to room temperature and then mixed with 0.3 parts by mass of butyl stearate using a food mixer, whereby a composition A2 was obtained.

<Preparation of Composition A3>

Using a compact jet mill pulverizer (Co-Jet System α-mkIII, manufactured by Seishin Enterprise Co., Ltd.), 40 parts by mass of the above-obtained melamine salt, 60 parts by mass of the above-obtained piperazine salt, and 0.4 parts by mass of a hydrotalcite (DHT-4A, manufactured by Kyowa Chemical Industry Co., Ltd.) were pulverized at a P nozzle pressure of 0.5 to 0.7 MPa, a G nozzle pressure of 0.5 to 0.65 MPa, and a sample input rate of 100 g/h, and subsequently mixed with 0.3 parts by mass of a methyl hydrogen silicone oil (KF-9901, manufactured by Shin-Etsu Chemical Co., Ltd.) using a food mixer, followed by heating to 150°C in a heating oven. The resultant was allowed to cool to room temperature and then mixed with 0.3 parts by mass of a dimethyl silicone oil (KF-96, manufactured by Shin-Etsu Chemical Co., Ltd.) using a food mixer, whereby a composition A3 was obtained.

<Preparation of Composition A4>

Using a compact jet mill pulverizer (Co-Jet System α-mkIII, manufactured by Seishin Enterprise Co., Ltd.), 40 parts by mass of the above-obtained melamine salt, 60 parts by mass of the above-obtained piperazine salt, and 5 parts by mass of Zinc Oxide Type 1 (manufactured by Mitsui Mining and Smelting Co., Ltd.) were pulverized at a P nozzle pressure of 0.5 to 0.7 MPa, a G nozzle pressure of 0.5 to 0.65 MPa, and a sample input rate of 100 g/h, and subsequently mixed with 1 part by mass of 2-(3,4-epoxycyclohexyl)ethyltrimethoxysilane (SILA-ACE S530, manufactured by JNC Corporation) using a food mixer, followed by heating to 150°C in a heating oven. The resultant was allowed to cool to room temperature and then mixed with 0.2 parts by mass of bis[2-(2-butoxyethoxy)ethyl] adipate using a food mixer, whereby a composition A4 was obtained.

<Preparation of Composition A5>

Using a compact jet mill pulverizer (Co-Jet System α-mkIII, manufactured by Seishin Enterprise Co., Ltd.), 40 parts by mass of the above-obtained melamine salt and 60 parts by mass of the above-obtained piperazine salt were pulverized at a P nozzle pressure of 0.5 to 0.7 MPa, a G nozzle pressure of 0.5 to 0.65 MPa, and a sample input rate of 100 g/h, and subsequently mixed with 1 part by mass of 3-glycidoxypropyltrimethoxysilane (KBM-403, manufactured by Shin-Etsu Chemical Co., Ltd.) using a food mixer, followed by heating to 150°C in a heating oven. The resultant was allowed to cool to room temperature and then mixed with 0.2 parts by mass of bis[2-(2-butoxyethoxy)ethyl] adipate using a food mixer, whereby a composition A5 was obtained.

<Preparation of Composition A6>

Using a compact jet mill pulverizer (Co-Jet System α-mkIII, manufactured by Seishin Enterprise Co., Ltd.), 40 parts by mass of the above-obtained melamine salt, 60 parts by mass of the above-obtained piperazine salt, and 5 parts by mass of Zinc Oxide Type 1 (manufactured by Mitsui Mining and Smelting Co., Ltd.) were pulverized at a P nozzle pressure of 0.5 to 0.7 MPa, a G nozzle pressure of 0.5 to 0.65 MPa, and a sample input rate of 100 g/h, and subsequently mixed with 1 part by mass of 3-glycidoxypropyltrimethoxysilane (KBM-403, manufactured by Shin-Etsu Chemical Co., Ltd.) using a food mixer, followed by heating to 150°C in a heating oven. The resultant was allowed to cool to room temperature and then mixed with 0.2 parts by mass of polyethylene glycol (300) dioctylate using a food mixer, whereby a composition A6 was obtained.

<Preparation of Composition A7>

Using a compact jet mill pulverizer (Co-Jet System α-mkIII, manufactured by Seishin Enterprise Co., Ltd.), 35 parts by mass of the above-obtained melamine salt, 5 parts by mass of melamine polyphosphate (PMP100, manufactured

by Nissan Chemical Corporation), and 60 parts by mass of the above-obtained piperazine salt were pulverized at a P nozzle pressure of 0.5 to 0.7 MPa, a G nozzle pressure of 0.5 to 0.65 MPa, and a sample input rate of 100 g/h, and subsequently mixed with 1 part by mass of 2-(3,4-epoxycyclohexyl)ethyltrimethoxysilane (SILA-ACE S530, manufactured by JNC Corporation) using a food mixer, followed by heating to 150°C in a heating oven. The resultant was allowed to cool to room temperature and then mixed with 0.2 parts by mass of polyethylene glycol (300) dioctylate using a food mixer, whereby a composition A7 was obtained.

<Preparation of Composition A8>

Using a food mixer, 70 parts by mass of ammonium polyphosphate (EXOLIT AP422, manufactured by Clariant), 20 parts by mass of poly-[2,4-(piperazin-1,4-yl)-6-(morpholin-4-yl)-1,3,5-triazine], 10 parts by mass of melamine cyanurate (MC-4000, manufactured by Nissan Chemical Corporation), and 0.2 parts by mass of stearic acid were mixed and then pulverized (2 minutes), whereby a composition A8 was obtained.

<Preparation of Composition A9>

Using a food mixer, 60 parts by mass of ammonium polyphosphate (EXOLIT AP422, manufactured by Clariant), 20 parts by mass of aluminum diethylphosphinate (EXOLIT OP1230, manufactured by Clariant), 20 parts by mass of poly-[2,4-(piperazin-1,4-yl)-6-(morpholin-4-yl)-1,3,5-triazine], and 0.2 parts by mass of stearic acid were mixed and then pulverized (2 minutes), whereby a composition A9 was obtained.

<Preparation of Composition A10>

Using a compact jet mill pulverizer (Co-Jet System $\alpha$-mkIII, manufactured by Seishin Enterprise Co., Ltd.), 60 parts by mass of the above-obtained piperazine salt and 40 parts by mass of melamine polyphosphate (PMP100, manufactured by Nissan Chemical Corporation) were pulverized at a P nozzle pressure of 0.5 to 0.7 MPa, a G nozzle pressure of 0.5 to 0.65 MPa, and a sample input rate of 100 g/h, and subsequently mixed with 0.2 parts by mass of stearic acid using a food mixer, whereby a composition A10 was obtained.

<Preparation of Composition A11>

Using a compact jet mill pulverizer (Co-Jet System $\alpha$-mkIII, manufactured by Seishin Enterprise Co., Ltd.), 70 parts by mass of ammonium polyphosphate (EXOLIT AP422, manufactured by Clariant) and 30 parts by mass of melamine cyanurate (MC-4000, manufactured by Nissan Chemical Corporation) were pulverized at a P nozzle pressure of 0.5 to 0.7 MPa, a G nozzle pressure of 0.5 to 0.65 MPa, and a sample input rate of 200 g/h, and subsequently mixed with 0.2 parts by mass of stearic acid using a food mixer, whereby a composition A11 was obtained.

<Preparation of Composition B1>

Using a compact jet mill pulverizer (Co-Jet System $\alpha$-mkIII, manufactured by Seishin Enterprise Co., Ltd.), 40 parts by mass of the above-obtained melamine salt, 60 parts by mass of the above-obtained piperazine salt, and 0.4 parts by mass of a hydrotalcite (DHT-4A, manufactured by Kyowa Chemical Industry Co., Ltd.) were pulverized at a P nozzle pressure of 0.5 to 0.7 MPa, a G nozzle pressure of 0.5 to 0.65 MPa, and a sample input rate of 100 g/h, and the resultant was mixed with 0.3 parts by mass of a methyl hydrogen silicone oil (KF-99, manufactured by Shin-Etsu Chemical Co., Ltd.) using a food mixer, and subsequently heated to 150°C in a heating oven, whereby a composition B 1 was obtained.

<Preparation of Composition B2>

Using a compact jet mill pulverizer (Co-Jet System $\alpha$-mkIII, manufactured by Seishin Enterprise Co., Ltd.), 35 parts by mass of the above-obtained melamine salt, 5 parts by mass of melamine polyphosphate (PMP100, manufactured by Nissan Chemical Corporation), 60 parts by mass of the above-obtained piperazine salt, and 5 parts by mass of Zinc Oxide Type 1 (manufactured by Mitsui Mining and Smelting Co., Ltd.) were pulverized at a P nozzle pressure of 0.5 to 0.7 MPa, a G nozzle pressure of 0.5 to 0.65 MPa, and a sample input rate of 100 g/h, and the resultant was mixed with 0.3 parts by mass of a methyl hydrogen silicone oil (KF-99, manufactured by Shin-Etsu Chemical Co., Ltd.) using a food mixer, and subsequently heated to 150°C in a heating oven, whereby a composition B2 was obtained.

<Preparation of Composition B3>

Using a compact jet mill pulverizer (Co-Jet System α-mkIII, manufactured by Seishin Enterprise Co., Ltd.), 40 parts by mass of the above-obtained melamine salt, 60 parts by mass of the above-obtained piperazine salt, and 0.4 parts by mass of a hydrotalcite (DHT-4A, manufactured by Kyowa Chemical Industry Co., Ltd.) were pulverized at a P nozzle pressure of 0.5 to 0.7 MPa, a G nozzle pressure of 0.5 to 0.65 MPa, and a sample input rate of 100 g/h, and the resultant was mixed with 0.3 parts by mass of a methyl hydrogen silicone oil (KF-9901, manufactured by Shin-Etsu Chemical Co., Ltd.) using a food mixer, and subsequently heated to 150°C in a heating oven, whereby a composition B3 was obtained.

<Preparation of Composition B4>

Using a compact jet mill pulverizer (Co-Jet System α-mkIII, manufactured by Seishin Enterprise Co., Ltd.), 40 parts by mass of the above-obtained melamine salt, 60 parts by mass of the above-obtained piperazine salt, and 5 parts by mass of Zinc Oxide Type 1 (manufactured by Mitsui Mining and Smelting Co., Ltd.) were pulverized at a P nozzle pressure of 0.5 to 0.7 MPa, a G nozzle pressure of 0.5 to 0.65 MPa, and a sample input rate of 100 g/h, and the resultant was mixed with 1 part by mass of 2-(3,4-epoxycyclohexyl)ethyltrimethoxysilane (SILA-ACE S530, manufactured by JNC Corporation) using a food mixer, and subsequently heated to 150°C in a heating oven, whereby a composition B4 was obtained.

<Preparation of Composition B5>

Using a compact jet mill pulverizer (Co-Jet System α-mkIII, manufactured by Seishin Enterprise Co., Ltd.), 40 parts by mass of the above-obtained melamine salt and 60 parts by mass of the above-obtained piperazine salt were pulverized at a P nozzle pressure of 0.5 to 0.7 MPa, a G nozzle pressure of 0.5 to 0.65 MPa, and a sample input rate of 100 g/h, and the resultant was mixed with 1 part by mass of 3-glycidoxypropyltrimethoxysilane (KBM-403, manufactured by Shin-Etsu Chemical Co., Ltd.) using a food mixer, and subsequently heated to 150°C in a heating oven, whereby a composition B5 was obtained.

<Preparation of Composition B6>

Using a compact jet mill pulverizer (Co-Jet System α-mkIII, manufactured by Seishin Enterprise Co., Ltd.), 40 parts by mass of the above-obtained melamine salt, 60 parts by mass of the above-obtained piperazine salt, and 5 parts by mass of Zinc Oxide Type 1 (manufactured by Mitsui Mining and Smelting Co., Ltd.) were pulverized at a P nozzle pressure of 0.5 to 0.7 MPa, a G nozzle pressure of 0.5 to 0.65 MPa, and a sample input rate of 100 g/h, and the resultant was mixed with 1 part by mass of 3-glycidoxypropyltrimethoxysilane (KBM-403, manufactured by Shin-Etsu Chemical Co., Ltd.) using a food mixer, and subsequently heated to 150°C in a heating oven, whereby a composition B6 was obtained.

<Preparation of Composition B7>

Using a compact jet mill pulverizer (Co-Jet System α-mkIII, manufactured by Seishin Enterprise Co., Ltd.), 35 parts by mass of the above-obtained melamine salt, 5 parts by mass of melamine polyphosphate (PMP100, manufactured by Nissan Chemical Corporation), and 60 parts by mass of the above-obtained piperazine salt were pulverized at a P nozzle pressure of 0.5 to 0.7 MPa, a G nozzle pressure of 0.5 to 0.65 MPa, and a sample input rate of 100 g/h, and the resultant was mixed with 1 part by mass of 2-(3,4-epoxycyclohexyl)ethyltrimethoxysilane (SILA-ACE S530, manufactured by JNC Corporation) using a food mixer, and subsequently heated to 150°C in a heating oven, whereby a composition B7 was obtained.

<Preparation of Composition B8>

Using a food mixer, 100 parts by mass of the composition A3 and 3 parts by mass of a process oil (DIANA PROCESS OIL PW-90, manufactured by Idemitsu Kosan Co., Ltd.) were mixed to obtain a composition B8.

<Preparation of Composition B9>

Using a food mixer, 40 parts by mass of the above-obtained melamine salt and 60 parts by mass of above-obtained piperazine salt were pulverized for 2 minutes, and the resultant was mixed with 1 part by mass of 2-(3,4-epoxycyclohexyl)ethyltrimethoxysilane (SILA-ACE S530, manufactured by JNC Corporation) using a food mixer, and subsequently heated to 150°C in a heating oven. The resultant was allowed to cool to room temperature and then mixed with 0.3 parts by mass of bis[2-(2-butoxyethoxy)ethyl] adipate using a food mixer, whereby a composition B9 was obtained.

<Preparation of Composition B 10>

Using a compact jet mill pulverizer (Co-Jet System α-mkIII, manufactured by Seishin Enterprise Co., Ltd.), 100 parts by mass of the composition B1 was pulverized at a P nozzle pressure of 0.5 to 0.7 MPa, a G nozzle pressure of 0.5 to 0.65 MPa, and a sample input rate of 50 g/h, and the resultant was mixed with 1 part by mass of 2-(3,4-epoxycyclohexyl)ethyltrimethoxysilane (SILA-ACE S530, manufactured by JNC Corporation) using a food mixer, and subsequently heated to 150°C in a heating oven, whereby a composition B10 was obtained.

For the thus obtained flame retardant agent compositions, the below-described items were measured. The measurement results and the values calculated from the measurement results based on equation (I) are shown in Tables 1 to 3.

<Measurement of Loose Bulk Density>

The loose bulk density of each of the above-obtained flame retardant agent compositions was measured using a powder property analyzer (MULTI TESTER MT-02, manufactured by Seishin Enterprise Co., Ltd.) with a cylindrical container having a diameter of 5 cm and a volume of 100 $cm^3$.

A sample was gently filled into the container until a heap was formed, the excess sample above the container surface was leveled off, and the weight of the sample loosely packed in the container was measured. At this point, the loose bulk density ($g/cm^3$) was calculated as the weight (g) of sample loosely packed in container divided by 100 ($cm^3$).

<Measurement of Particle Size Distribution>

As for the 10% cumulative particle size $D_{10}$ and the 50% cumulative particle size $D_{50}$, the above-obtained flame retardant agent compositions were each added to methanol and the resultant was mixed to prepare a solution, and the measurement was performed for this solution in a wet condition while ultrasonically dispersing the composition, using a laser diffraction-scattering particle size distribution analyzer (MICROTRAC MT3000II, manufactured by MicrotracBEL Corp.).

Further, the below-described items were evaluated for each of the above-obtained flame retardant agent compositions. The evaluation results are shown in Tables 1 to 3.

<Evaluation of Dust Scattering Property>

As illustrated in FIG. 1, an acrylic transparent cylinder 10 (outer diameter: 110 mm, inner diameter: 98 mm, length: 500 mm) having an open end only on one side was set vertically such that the opening was on top, and the side surface was surrounded by a black acrylic plate 11 from three directions. The above-obtained flame retardant agent compositions were each weighed in an amount of 10 g and dropped naturally from the opening on the upper end of the cylinder 10, and the state of scattering dust was recorded by a video camera. From the thus obtained video, an image of the state of powder five seconds after coming into contact with the bottom surface was obtained and, from this image, the luminance of a portion 12 at about 150 mm from the lower end of the cylinder, which is defined by the HLS color space, was extracted. Further, the luminance in a case where a standard white plate (X: 94.62, Y: 99.79, Z: 106.92 (SCI method)) was arranged in the portion 12 as well as the luminance prior to the drop of the flame retardant agent composition were extracted in the same manner. The degree of dust scattering was calculated by equation (III):

$$\frac{(\text{Sample}) - (\text{Black})}{(\text{White}) - (\text{Black})} \times 100 \qquad (\text{III}).$$

In equation (III), "(Sample)" represents the luminance of the portion 12 when the flame retardant agent composition was dropped; "(White)" represents the luminance of the portion 12 when the standard white plate was arranged in the portion 12; and "(Black)" represents the luminance of the portion 12 prior to the drop of the flame retardant agent composition.

The smaller the value calculated by equation (III), the lower the dust scattering property of the flame retardant agent composition is. It is noted here that a value of 30 or larger represents a level at which the working environment is adversely affected by dust at the time of supplying the flame retardant agent composition to a mixer or a processing

machine. This value is shown in Tables 1 to 3 as an evaluation value of the dust scattering property.

<Evaluation of Angle of Repose>

Each flame retardant agent composition was injected and deposited onto a disk using a funnel, and the angle at which the flame retardant agent composition was maintained stably without spontaneously collapsing was measured as the angle of repose (°). A smaller value of this angle of repose means superior fluidity of the flame retardant agent composition.

It is noted here that, when the angle of repose is 60° or larger, the flame retardant agent composition is likely to cause clogging of a hopper or a feeder at the time of processing, which is not preferred.

<Preparation of Test Pieces for Flame Retardancy Evaluation>

A polypropylene resin composition obtained by blending 100 parts by mass of a polypropylene (melt flow rate = 14 g/10 min (in accordance with JIS K7210, load: 2.16 kg, temperature: 230°C)) with 0.1 parts by mass of calcium stearate (neutralizer), 0.1 parts by mass of tetrakis[3-(3,5-di-*tert*-butyl-4-hydroxyphenyl)propionic acid methyl]methane (phenolic antioxidant), and 0.1 parts by mass of tris(2,4-di-*tert*-butylphenyl)phosphite (phosphorus-based antioxidant) was blended with 54 parts by mass of each of the above-obtained flame retardant agent compositions (A1 to A11 and B1 to B10) to obtain flame-retardant resin compositions. The thus obtained flame-retardant resin compositions were each melt-kneaded using a twin-screw extruder (TEX-28V, manufactured by The Japan Steel Works, Ltd.) at a cylinder temperature of 200 to 230°C and a screw speed of 150 rpm to obtain pellets of the respective flame-retardant resin compositions. The thus obtained pellets were injection-molded using an injection molding machine (EC60NII-1.5A, manufactured by Toshiba Machine Co., Ltd.) at a cylinder temperature of 220°C and a mold temperature of 40°C, whereby test pieces of 127 mm × 12.7 mm × 1.6 mm were obtained.

<Evaluation of Flame Retardancy>

Using each of the thus obtained test pieces, a flame retardancy evaluation test was conducted in accordance with the UL-94V standard.

Each test piece of 127 mm in length, 12.7 mm in width, and 1.6 mm in thickness was held vertically, and a burner flame was brought into contact with the lower end of the test piece for 10 seconds, after which the flame was removed, and the time required for the flame ignited on the test piece to be extinguished was measured. Next, simultaneously with the flame extinction, a flame was again brought into contact with the test piece for 10 seconds, and the time required for the flame ignited on the test piece to be extinguished was measured in the same manner as in the first measurement. In addition, it was also evaluated at the same time whether or not a piece of cotton placed under the test piece was ignited by cinders falling from the test piece.

Based on, for example, the combustion time in the first and the second measurements and the presence or absence of ignition of cotton piece, the condition of combustion was rated in accordance with the UL-94V standard. The combustion rating of V-0 represents the highest level of flame retardancy, and the flame retardancy decreases in the order of V-1 and V-2. It is noted here that "NR" was assigned when the condition did not correspond to any of the ratings V-0 to V-2.

[Table 1]

| | | Example 1 | Example 2 | Example 3 | Example 4 | Example 5 | Example 6 | Example 7 | Example 8 |
|---|---|---|---|---|---|---|---|---|---|
| Constitution | Flame retardant agent composition | Composition A1 | Composition A2 | Composition A3 | Composition A4 | Composition A5 | Composition A6 | Composition A7 | Composition A8 |
| | d [d/cm$^3$] | 0.35 | 0.38 | 0.35 | 0.37 | 0.35 | 0.36 | 0.38 | 0.49 |
| | $D_{10}$ [μm] | 3.51 | 3.48 | 3.18 | 3.12 | 2.85 | 3.37 | 3.09 | 3.58 |
| | $D_{50}$ [μm] | 6.98 | 7.32 | 6.81 | 6.84 | 6.58 | 6.93 | 7.28 | 19.06 |
| | d/($D_{50}$ - $D_{10}$) | 0.101 | 0.099 | 0.096 | 0.099 | 0.094 | 0.101 | 0.091 | 0.032 |
| Evaluation results | Dust scattering property | 22 | 26 | 25 | 16 | 15 | 15 | 18 | 6 |
| | Angle of repose (°) | 51.0 | 49.0 | 48.5 | 55.0 | 54.0 | 50.0 | 55.0 | 53.7 |
| | Flame retardancy UL-94V Evaluation rank | V-0 | V-0 | V-0 | V-0 | V-0 | V-0 | V-0 | V-0 |

[Table 2]

| | | Example 9 | Example 10 | Example 11 | Comparative Example 1 | Comparative Example 2 | Comparative Example 3 | Comparative Example 4 | Comparative Example 5 |
|---|---|---|---|---|---|---|---|---|---|
| Constitution | Flame retardant agent composition | Composition A9 | Composition A10 | Composition A11 | Composition B1 | Composition B2 | Composition B3 | Composition B4 | Composition B5 |
| | d [d/cm$^3$] | 0.49 | 0.45 | 0.44 | 0.41 | 0.42 | 0.41 | 0.39 | 0.39 |
| | $D_{10}$ [μm] | 7.50 | 2.73 | 3.14 | 2.85 | 3.37 | 2.82 | 2.85 | 3.03 |
| | $D_{50}$ [μm] | 17.99 | 7.33 | 9.61 | 6.32 | 7.04 | 6.33 | 6.32 | 6.50 |
| | $d/(D_{50} - D_{10})$ | 0.047 | 0.098 | 0.068 | 0.118 | 0.114 | 0.117 | 0.112 | 0.112 |
| Evaluation results | Dust scattering property | 13 | 17 | 3 | 45 | 40 | 49 | 41 | 40 |
| | Angle of repose (°) | 51.8 | 53.2 | 43.6 | 40.2 | 41.5 | 39.8 | 49.0 | 49.5 |
| | Flame retardancy UL-94V Evaluation rank | V-0 | V-0 | V-0 | V-0 | V-0 | V-0 | V-0 | V-0 |

[Table 3]

| | | Comparative Example 6 | Comparative Example 7 | Comparative Example 8 | Comparative Example 9 | Comparative Example 10 |
|---|---|---|---|---|---|---|
| Constitution | Flame retardant agent composition | Composition B6 | Composition B7 | Composition B8 | Composition B9 | Composition B10 |
| | d [d/cm$^3$] | 0.40 | 0.41 | 0.42 | 0.41 | 0.26 |
| | $D_{10}$ [μm] | 2.75 | 3.27 | 3.58 | 2.95 | 1.71 |
| | $D_{50}$ [μm] | 6.22 | 6.93 | 19.06 | 51.14 | 3.13 |
| | $d/(D_{50} - D_{10})$ | 0.115 | 0.112 | 0.027 | 0.009 | 0.184 |
| Evaluation results | Dust scattering property | 38 | 38 | 5 | 10 | 12 |
| | Angle of repose (°) | 48.0 | 47.9 | 62.5 | 64.0 | 65.0 |
| | Flame retardancy UL-94V Evaluation rank | V-0 | V-0 | V-0 | V-0 | V-0 |

The flame retardancy was favorable in all of Examples 1 to 11 and Comparative Examples 1 to 10.

Meanwhile, in the evaluation of the dust scattering property, Examples 1 to 11 were favorable; however, Comparative Examples 1 to 7 were found to exhibit a value of higher than 30, which is a level that adversely affects the working environment.

Further, in the evaluation of the angle of repose, Examples 1 to 11 were favorable; however, Comparative Examples 8 to 10 were found to be inferior in terms of powder flowability, exhibiting a value of larger than 60°.

From these results, it was demonstrated that the flame retardant agent composition of the present invention exhibits low dust scattering property while having good powder flowability, and shows good flame retardant performance.

DESCRIPTION OF SYMBOLS

10: cylinder
11: acrylic plate
12: portion at about 150 mm from lower end of cylinder

## Claims

**1.** A flame retardant agent composition, comprising at least one phosphate compound represented by Formula (1) or (2),

wherein, when the loose bulk density of the flame retardant agent composition is defined as d (g/cm$^3$), and the 10% cumulative particle size and the 50% cumulative particle size of the flame retardant agent composition in a volume-based particle size distribution are defined as $D_{10}$ (μm) and $D_{50}$ (μm), respectively, d, $D_{10}$ (μm), and $D_{50}$ (μm) satisfy equation (I):

$$0.030 \leq d/(D_{50} - D_{10}) \leq 0.110 \qquad (I),$$

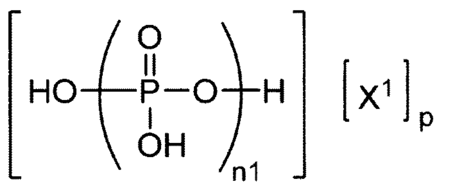
(1)

where n1 represents a number of 1 to 100; $X^1$ represents ammonia or a triazine derivative represented by Formula (1-A); and p represents a number satisfying $0 < p \leq n1 + 2$,

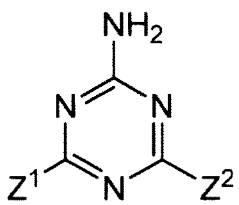
(1 − A)

where $Z^1$ and $Z^2$ each independently represent a group selected from the group consisting of a $-NR^{11}R^{12}$ group, a hydroxy group, a mercapto group, a linear or branched alkyl group having 1 to 10 carbon atoms, a linear or branched alkoxy group having 1 to 10 carbon atoms, a phenyl group, and a vinyl group; and $R^{11}$ and $R^{12}$ each independently represent a hydrogen atom, a linear or branched alkyl group having 1 to 6 carbon atoms, or a methylol group, and

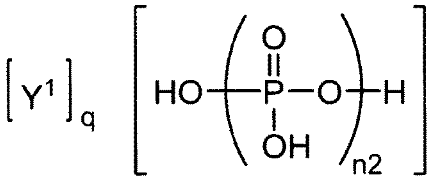 (2)

where n2 represents a number of 1 to 100; $Y^1$ represents [$R^{21}R^{22}N(CH_2)_mNR^{23}R^{24}$], piperazine, or a piperazine ring-containing diamine; $R^{21}$, $R^{22}$, $R^{23}$, and $R^{24}$ each independently represent a hydrogen atom, or a linear or branched alkyl group having 1 to 5 carbon atoms; m represents an integer of 1 to 10; and q represents a number satisfying $0 < q \leq n2 + 2$.

2. The flame retardant agent composition according to claim 1, wherein d satisfies equation (II):

$$0.20 \leq d \leq 0.80 \quad (II).$$

3. The flame retardant agent composition according to claim 1 or 2, comprising the phosphate compound represented by Formula (1) where $X^1$ is melamine.

4. The flame retardant agent composition according to claim 1 or 2, comprising the phosphate compound represented by Formula (2) where $Y^1$ is piperazine.

5. The flame retardant agent composition according to claim 1 or 2, comprising the phosphate compound represented by Formula (1) where $X^1$ is ammonia.

6. The flame retardant agent composition according to claim 1 or 2, comprising:

the phosphate compound represented by Formula (1) where $X^1$ is melamine; and
the phosphate compound represented by Formula (2) where $Y^1$ is piperazine.

7. The flame retardant agent composition according to any one of claims 1 to 6, comprising:

the phosphate compound represented by Formula (1) where n1 is 2; and
the phosphate compound represented by Formula (2) where n2 is 2.

8. A flame-retardant resin composition, comprising:

the flame retardant agent composition according to any one of claims 1 to 7; and
a thermoplastic resin.

9. The flame-retardant resin composition according to claim 8, wherein the thermoplastic resin comprises a polyolefin resin.

10. A molded article, comprising the flame-retardant resin composition according to claim 9.

FIG. 1

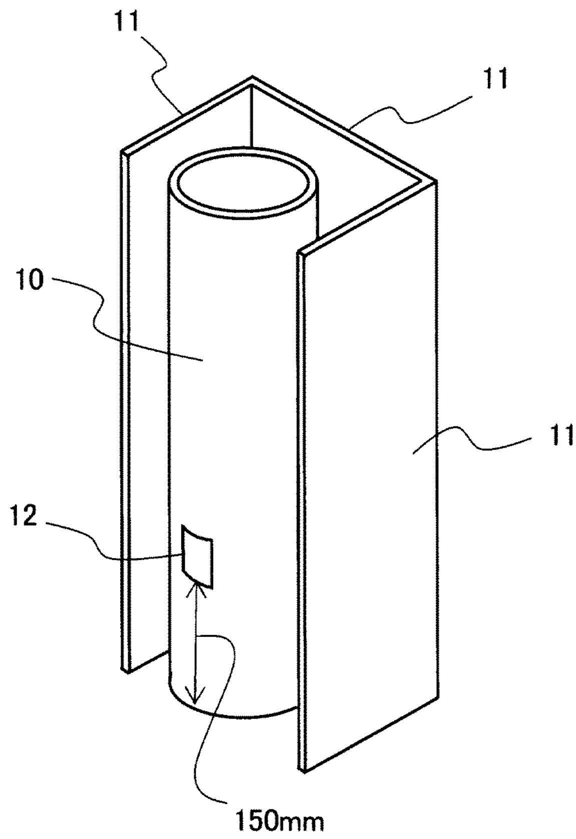

## INTERNATIONAL SEARCH REPORT

International application No.
**PCT/JP2021/046207**

### A. CLASSIFICATION OF SUBJECT MATTER

***C09K 21/04***(2006.01)i; ***C09K 21/12***(2006.01)i; ***C08L 101/00***(2006.01)i
FI: C09K21/12; C08L101/00; C09K21/04

According to International Patent Classification (IPC) or to both national classification and IPC

### B. FIELDS SEARCHED

Minimum documentation searched (classification system followed by classification symbols)

C09K21/04; C09K21/12; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 10-306082 A (NISSAN CHEMICAL IND LTD) 17 November 1998 (1998-11-17) claims 1-14 | 1-10 |
| A | JP 2003-138264 A (TEIJIN CHEMICALS LTD) 14 May 2003 (2003-05-14) claims 1-3 | 1-10 |
| A | JP 2018-537549 A (CLARIANT PLASTICS & COATINGS LTD) 20 December 2018 (2018-12-20) claims 1-25 | 1-10 |
| A | JP 2006-291207 A (CLARIANT PRODUKTE (DEUTSCHLAND) GMBH) 26 October 2006 (2006-10-26) claims 1-26 | 1-10 |
| A | JP 2013-534940 A (DSM IP ASSETS B.V) 09 September 2013 (2013-09-09) claims 1-12 | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 February 2022** | **08 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/046207**

| Patent document cited in search report | Publication date (day/month/year) | Patent family member(s) | Publication date (day/month/year) |
|---|---|---|---|
| JP 10-306082 A | 17 November 1998 | US 6121445 A<br>claims 1-14<br>WO 1998/039307 A1<br>EP 974588 A1 | |
| JP 2003-138264 A | 14 May 2003 | (Family: none) | |
| JP 2018-537549 A | 20 December 2018 | US 2018/0304493 A1<br>claims 1-26<br>WO 2017/067906 A1<br>EP 3365277 A1<br>CN 107848802 A<br>KR 10-2018-0072762 A | |
| JP 2006-291207 A | 26 October 2006 | US 2006/0226404 A1<br>claims 1-31<br>EP 1710275 A1<br>DE 102005016195 A | |
| JP 2013-534940 A | 09 September 2013 | US 2013/0210970 A1<br>claims 1-12<br>WO 2011/154409 A1<br>EP 2580265 A1<br>CN 102939324 A<br>KR 10-2013-0118857 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003026935 A
- WO 2016125612 A
- WO 2019009340 A